(19) Europäisches Patentamt
European Patent Office
Office européen des brevets

(11) Publication number: **0 012 473**
**B1**

(12) # EUROPEAN PATENT SPECIFICATION

(45) Date of publication of patent specification: **09.03.83**

(21) Application number: **79200717.1**

(22) Date of filing: **03.12.79**

(51) Int. Cl.[3]: **C 01 B 33/28,**
B 01 J 29/28, B 01 J 20/18,
C 10 G 45/64, C 10 G 25/03

(54) **A process for the preparation of ferrierite, ferrierite thus obtained and its use as catalyst or catalyst carrier for converting hydrocarbons, and for separating hydrocarbons.**

(30) Priority: **14.12.78 NL 7812162**

(43) Date of publication of application:
**25.06.80 Bulletin 80/13**

(45) Publication of the grant of the patent:
**09.03.83 Bulletin 83/10**

(84) Designated Contracting States:
**DE FR GB SE**

(56) References cited:
**DE - A - 2 817 577**
**FR - A - 2 228 721**
**US - A - 3 933 974**
**US - A - 4 000 248**
**US - A - 4 016 245**
**US - A - 4 046 859**

**ZEITSCHRIFT FÜR CHEMIE, vol. 13, 1973, no. 3, Leipzig DE F. WOLF et al. "Über den Einfluss organischer Verbindungen auf die hydrothermale Synthese zeolithischer Molekularsiebe der Typen A, X, und Y, pages 109—110**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Nanne, Johannes Martinus**
**Badhuisweg 3**
**NL-1031 CM AMSTERDAM (NL)**
Inventor: **Post, Martin Franciscus Maria**
**Badhuisweg 3**
**NL-1031 CM AMSTERDAM (NL)**
Inventor: **Stork, Willem Hartman Jurriaan**
**Badhuisweg 3**
**NL-1031 CM AMSTERDAM (NL)**

(74) Representative: **Puister, Antonius Tonnis, Mr. et al,**
**P.O. Box 302**
**NL-2501 CH The Hague (NL)**

**EP 0 012 473 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# A process for the preparation of ferrierite, ferrierite thus obtained and its use as catalyst or catalyst carrier for converting hydrocarbons, and for separating hydrocarbons

The invention relates to a process for the preparation of ferrierite.

Ferrierite is a crystalline aluminosilicate zeolite, which is used, inter alia, as adsorbent and as catalyst or catalyst carrier. Ferrierite can be prepared by maintaining an aqueous mixture containing one or more alkali metal compounds, one or more aluminium compounds and one or more silicon compounds in a given ratio at elevated temperature until the ferrierite has been formed and subsequently separating the ferrierite crystals from the mother liquor. This procedure has three drawbacks, which are connected with the reaction temperature and with the purity and the molar $SiO_2/Al_2O_3$ ratio of the ferrierite. As regards the reaction temperature it has been found that this procedure requires temperatures higher than 300°C. These high reaction temperatures involve the use of high pressures, which necessitates the use of expensive high-pressure equipment. As regards the molar $SiO_2/Al_2O_3$ ratio of the ferrierite it has been found that this procedure produces as a rule ferrierite with a molar $SiO_2/Al_2O_3$ ratio lower than 15. When the ferrierite is used for catalytic purposes, a ferrierite with a higher molar $SiO_2/Al_2O_3$ ratio is needed in view of the catalytic stability. In the above-mentioned procedure the purity of the ferrierite also leaves much to be desired. As a rule a solid product is obtained consisting of less than 80%w ferrierite.

In US patent specification 4,000,248 a process is described for the hydrothermal preparation of ferrierite from an aqueous mixture of alkalimetal (M), aluminium and silicon compounds in the presence of N-methyl pyridinium hydroxide in molar ratios of:

$SiO_2/Al_2O_3$ in the range 5:1 to 160:1;
$M_2O/SiO_2$ in the range 0.07 to 1.8:1;
$M_2O/(N\text{-methylpyridinium})_2O$ in the range 0.5:1 to 20:1, and
$H_2O/M_2O$ in the range 50:1 to 170:1,

by heating at a temperature of 140 to 160°C. Ferrierite in about 70—80% purity is produced.

From the above ratios the following molar ratios can be calculated:

$H_2O/SiO_2 = 3.5—306$;
$M_2O/Al_2O_3 = 0.35—288$, and
$(N\text{-methylpyridinium})_2O/SiO_2 = 0.0035—3.6$.

The Applicant has done an investigation concerning the preparation of ferrierite. In this investigation a procedure was found which provides a considerable improvement in connection with each of the three above-mentioned drawbacks. In this procedure the starting material is, as usual, an aqueous mixture containing one or more compounds of an alkali metal (M), one or more aluminium compounds and one or more silicon compounds. In addition, piperidine and/or one or more alkyl-substituted piperidines (NR) are incorporated into the aqueous mixture. The amounts of the various compounds in the aqueous mixture should be chosen such that the following requirements with respect to molar ratios, which except for piperidine and alkyl-substituted piperidines, are expressed in moles of the oxides, are satisfied:

$SiO_2 : Al_2O_3 > 15$,

$H_2O : SiO_2 = 5—500$,

$NR : SiO_2 = 0.05—1.0$, and

$M_2O : Al_2O_3 > 1$

A solid product consisting of more than 90%w ferrierite is formed by heating the aqueous mixture at a temperature between 100 and 200°C. The ferrierite has a molar $SiO_2/Al_2O_3$ ratio higher than 20.

The present patent application therefore relates to a process for the preparation of ferrierite by maintaining an aqueous mixture which contains one or more compounds of an alkali metal (M), one or more aluminium compounds, an organic nitrogen compound (NC) and one or more silicon compounds and subsequently separating the ferrierite crystals from the mother liquor, which process is characterized in that:

(a) the mixture contains piperidine and/or one or more alkyl-substituted piperidines (NR) as organic nitrogen compound;
(b) in the mixture the various compounds are present in the following molar ratios, which except for piperidine and alkyl-substituted piperidines, are expressed in moles of the oxides:

$SiO_2 : Al_2O_3 > 15$;

$H_2O : SiO_2 = 5—500$;

$NR : SiO_2 = 0.05—1.0$, and

$M_2O : Al_2O_3 > 1$;

(c) the preparation of ferrierite is effected by heating the mixture at a temperature between 100 and 200°C.

In the preparation of ferrierite according to the invention it is essential that the aqueous mixture that is used as the starting material contains piperidine and/or one or more alkyl-substituted piperidines. As regards the required presence of piperidine and/or alkyl-substituted piperidines in the aqueous mixture it has been found that, if in this mixture the compounds mentioned are replaced by closely related heterocyclic nitrogen compounds such as pyrrole, imidazole, pyridine or pyrrolidone, either

no ferrierite is formed at all, or the ferrierite obtained is highly contaminated with other zeolitic and/or amorphous material.

If the use of an alkyl-substituted piperidine is desired in the preparation of ferrierite according to the invention, alkyl piperidines containing only one alkyl substituent as well as alkyl piperidines containing two or more alkyl substituents are eligible for this purpose. If the alkyl piperidines contain only one alkyl substituent, this alkyl substituent may be present either at the nitrogen atom or at one of the carbon atoms of the piperidine. Examples of suitable monoalkyl piperidines in which the alkyl substituent is bonded to a carbon atom of the piperidine are 2-methyl, 3-methyl, 4-methyl, 2-ethyl, 3-ethyl and 2-propyl piperidine. Examples of suitable monoalkyl piperidines in which the alkyl substituent is bonded to the nitrogen atom of the piperidine are: 1-methyl, 1-ethyl, 1-propyl, 1-butyl, 1-pentyl, 1-octyl and 1-dodecyl piperidine. If it is desired in the preparation of ferrierite according to the invention to use an alkyl-substituted piperidine containing two or more alkyl substituents, suitable alkyl piperidines for this purpose are those in which all alkyl substituents are present at carbon atoms of the piperidine as well as those in which one of the alkyl substituents is present at the nitrogen atom of the piperidine and the rest of the alkyl substituents at carbon atoms of the piperidine. An example of a suitable alkyl-substituted piperidine of the latter group is 1,2-dimethyl piperidine. If the ferrierite preparation according to the invention is carried out using an alkyl-substituted piperidine, it is preferred to use a methyl piperidine for this purpose. As alkali metal, silicon and aluminium compounds which are to be incorporated into the aqueous mixture from which ferrierite is prepared according to the invention, in principle, all such compounds as have been used in the past in the preparation of this zeolite, are suitable. The alkali metal compound that is preferably used is a sodium compound. For the silicon compound and the aluminium compound preference is given to sodium water glass and aluminium sulphate.

As regards the amounts of the various components in the aqueous mixture from which ferrierite is prepared according to the invention it is preferable that these components are present in the following molar ratios, which except for piperidine and alkyl-substituted piperidines are expressed in moles of the oxides:

$SiO_2 : Al_2O_3 > 20$,

$H_2O : SiO_2 = 10—100$, and

$NR : SiO_2 = 0.2—0.6$

Ferrierite is a zeolite of the molecular sieve type whose accessibility is determined by pores having a diameter of about 0.6 nm. Ferrierite is very suitable as catalyst or catalyst carrier in a variety of catalytic processes. In view of the uniform pore diameter of ferrierite, this material is especially important for selectively carrying out catalytic processes in which either from a mixture of compounds with linear and branched structures substantially the compounds with linear structure are to be converted, or from a certain compound substantially compounds with linear structure are to be formed. Examples of such catalytic processes are selective (hydro) cracking and dehydrogenation of n-paraffins. When ferrierite is used as a catalyst or catalyst carrier, preference is given to a material whose alkali metal content has been reduced to less than 1%w and in particular to less than 0.05%w. Reducing the alkali metal content of ferrierite can conveniently be carried out by contacting the ferrierite once or several times with a solution containing ammonium ions and calcining the $NH_4^+$ ferrierite thus obtained, which yields the $H^+$ ferrierite. When ferrierite is used for catalytic purposes, it is preferably employed as carrier material for one or more catalytically active metal components. Ferrierite is very suitable for use as catalyst carrier in hydrocarbon conversion processes such as cracking, isomerization, dealkylation and hydrocracking. To this end one or more active metal components which impart hydrogenation-dehydrogenation properties to the ready catalyst are deposited on the ferrierite. Very suitable for this purpose are one or more metals of Groups VIB, VIIB and VIII of the Periodic Table. The ferrierite-based catalysts are especially important for converting hydrocarbons by hydrocracking. As a result of the uniform pore diameter of ferrierite these catalysts are pre-eminently suitable for selectively hydrocracking substantially n-paraffins in hydrocarbon oils consisting of mixtures of n-paraffins and other hydrocarbons (catalytic dewaxing).

In addition to the use of ferrierite as the carrier for catalysts for converting hydrocarbons, an important application of this material is as a molecular sieve for separating compounds with a substantially unbranched structure from mixtures of these compounds with related compounds with branched and/or cyclic structure. For this application the ferrierite should be at least partially dehydrated.

The invention will now be illustrated by the following Examples. In all examples the following procedure was used. An organic nitrogen compound was incorporated with stirring into a solution of sodium water glass (28%w $SiO_2$; 8%w $Na_2O$) in water. To the mixture thus obtained a solution of aluminium sulphate in water or in a mixture of water and sulphuric acid was added with stirring. The resultant mixture was stirred for a further 15 minutes and then maintained for a certain time at a temperature of 150°C. The solid product was isolated from the reaction mixture.

The composition of the starting mixtures, the

reaction time used, the composition of the isolated product and the molar $SiO_2/Al_2O_3$ ratio of the ferrierite are given in the Table below.

Examples 1—9 in the Table are according to the invention; Examples 10—13 have been included for comparison.

| Example No. | Molar composition of the starting mixture | Reaction time, h | Composition of the isolated solid product, %w | Molar $SiO_2/Al_2O_3$ ratio of the ferrierite |
|---|---|---|---|---|
| 1 | 93.5 $SiO_2$. 0.5 $Al_2O_3$. 21.4 $Na_2O$. 5.6 $Na_2SO_4$. 36.7 piperidine. 1938 $H_2O$ | 113 | Ferrierite : 100 | 40 |
| 2 | 93.5 $SiO_2$. $Al_2O_3$. 10 $Na_2O$. 17 $Na_2SO_4$. 36.7 piperidine, 1938 $H_2O$ | 113 | Ferrierite : 100 | 48 |
| 3 | 93.5 $SiO_2$. $Al_2O_3$. 21.4 $Na_2O$. 5.6 $Na_2SO_4$. 36.7 piperidine. 1938 $H_2O$ | 113 | Ferrierite : 100 | 30 |
| 4 | 93.5 $SiO_2$. $Al_2O_3$. 24 $Na_2O$. 3 $Na_2SO_4$. 36.7 piperidine. 1938 $H_2O$ | 113 | Ferrierite : 100 | 27 |
| 5 | 60 $SiO_2$. $Al_2O_3$. 2.7 $Na_2O$. 14.6 $Na_2SO_4$. 36.7 piperidine. 1938 $H_2O$ | 113 | Ferrierite : 100 | 69 |
| 6 | 60 $SiO_2$. $Al_2O_3$. 6.6 $Na_2O$. 10.7 $Na_2SO_4$. 36.7 piperidine. 1938 $H_2O$ | 113 | Ferrierite : 100 | 47 |
| 7 | 93.5 $SiO_2$. 2 $Al_2O_3$. 10 $Na_2O$. 17 $Na_2SO_4$. 36.7 piperidine. 1938 $H_2O$ | 113 | Ferrierite : 100 | 34 |
| 8 | 93.5 $SiO_2$. 2 $Al_2O_3$. 17.7 $Na_2O$. 9.3 $Na_2SO_4$. 36.7 piperidine. 1938 $H_2O$ | 113 | Ferrierite : 100 | 25 |
| 9 | 93.5 $SiO_2$. 4 $Al_2O_3$. 10 $Na_2O$. 17 $Na_2SO_4$. 36.7 piperidine. 1938 $H_2O$ | 113 | Ferrierite : 100 | 22 |
| 10 | 93.5 $SiO_2$. $Al_2O_3$. 7.4 $Na_2O$. 19.6 $Na_2SO_4$. 36.7 pyrrole. 1938 $H_2O$ | 140 | Ferrierite : 50<br>Amorphous material : 50 | |
| 11 | 93.5 $SiO_2$. $Al_2O_3$. 7.4 $Na_2O$. 19.6 $Na_2SO_4$. 36.7 imidazole. 1938 $H_2O$ | 140 | Ferrierite : 0<br>Other zeolitic material : 80<br>Amorphous material : 20 | |

| Example No. | Molar composition of the starting mixture | Reaction time, h | Composition of the isolated solid product, %w | Molar $SiO_2/Al_2O_3$ ratio of the ferrierite |
|---|---|---|---|---|
| 12 | 93.5 $SiO_2$. $Al_2O_3$. 7.4 $Na_2O$. 19.6 $Na_2SO_4$. 36.7 pyridine. 1938 $H_2O$ | 140 | Ferrierite : 50<br>Other zeolitic material : 30<br>Amorphous material : 20 | |
| 13 | 93.5 $SiO_2$. $Al_2O_3$. 7.4 $Na_2O$. 19.6 $Na_2SO_4$. 36.7 pyrrolidone. 1938 $H_2O$ | 140 | Ferrierite : 30<br>Other zeolitic material – alpha-quartz : 50<br>Amorphous material : 20 | |

## Claims

1. A process for the preparation of ferrierite by maintaining an aqueous mixture which contains one or more compounds of an alkali metal (M), one or more aluminium compounds, an organic nitrogen compound (NC) and one or more silicon compounds and subsequently separating the ferrierite crystals from the mother liquor, characterized in that:
(a) the mixture contains piperidine and/or one or more alkyl-substituted piperidines (NR) as organic nitrogen compound;
(b) in the mixture the various compounds are present in the following molar ratios, which except for piperidine and alkyl-substituted piperidines, are expressed in moles of the oxides:

$SiO_2 : Al_2O_3 > 15$;

$H_2O : SiO_2 = 5$—$500$;

$NR : SiO_2 = 0.05$—$1.0$, and

$M_2O : Al_2O_3 > 1$;

(c) the preparation of ferrierite is effected by heating the mixture at a temperature between 100 and 200°C.

2. A process according to claim 1, characterized in that a methyl piperidine is used as alkyl-substituted piperidine.
3. A process according to claim 1 or 2, characterized in that a sodium compound is used as alkali metal compound.
4. A process according to any one of claims 1—3, characterized in that sodium water glass is used as silicon compound and aluminium sulphate as aluminium compound.
5. A process according to any one of claims 1—4, characterized in that in the aqueous mixture the various compounds are present in the following molar ratios, which except for piperidine and alkyl-substituted piperidines, are expressed in moles of the oxides:

$SiO_2 : Al_2O_3 > 20$;

$H_2O : SiO_2 = 10$—$100$, and

$NR : SiO_2 = 0.2$—$0.6$.

6. Ferrierite, characterized in that it has been prepared according to a process as claimed in claim 1.
7. Catalysts, characterized in that they contain one or more metals of Groups VIB, VIIB and VIII on a ferrierite according to claim 6 as the carrier, of which ferrierite the alkali metal content has been reduced to less than 0.05%w.
8. Molecular sieves, characterized in that they consist of a ferrierite according to claim 6, which has at least partly been dehydrated.
9. A process for converting hydrocarbons, in particular the selective hydrocracking of substantially n-paraffins in mixtures of n-paraffins with other hydrocarbons, characterized in that a catalyst according to claim 7 is used.
10. A process for separating compounds with a substantially unbranched structure from mixtures of these compounds with related compounds with branched and/or cyclic structure, characterized in that a molecular sieve according to claim 8 is used.

## Patentansprüche

1. Ein Verfahren zur Herstellung von Ferrierit durch Aufrechterhalten eines wäßrigen Gemisches, das eine oder mehrere Verbindung(en) eines Alkalimetalls (M), eine oder mehrere Aluminiumverbindung(en), eine organische Stickstoffverbindung (NC) und eine oder mehrere Siliciumverbindung(en) enthält, und anschließendes Trennen der Ferrierit-Kristalle von der Mutterlauge, dadurch gekennzeichnet, daß
(a) das Gemisch Piperidin und/oder ein oder mehrere alkylsubstituierte(s) Piperidin(e) (NR) als organische Stickstoffverbindung enthält;
(b) die verschiedenen Verbindungen im Gemisch in den folgenden molaren Verhältnissen vorhanden sind, die, mit Ausnahme von Piperidin und alkylsubstituierten Piperidinen, in Molen der Oxide angegeben sind:

$SiO_2 : Al_2O_3 > 15$;

$H_2O : SiO_2 = 5$—$500$;

$NR : SiO_2 = 0{,}05$—$1{,}0$, und

$M_2O : Al_2O_3 > 1$;

(c) die Herstellung von Ferrierit durch Erhitzen des Gemisches auf eine Temperatur zwischen 100 und 200°C durchgeführt wird.
2. Ein Verfahren gemäß Anspruch 1, dadurch gekennzeichnet, daß ein Methylpiperidin als alkylsubstituiertes Piperidin verwendet wird.
3. Ein Verfahren gemäß Anspruch 1 oder 2, dadurch gekennzeichnet, daß eine Natriumverbindung als Alkalimetallverbindung verwendet wird.
4. Ein Verfahren gemäß einem der Ansprüche 1 bis 3, dadurch gekennzeichnet, daß Natrium-Wasserglas als Siliciumverbindung und Aluminiumsulfat als Aluminiumverbindung verwendet werden.
5. Ein Verfahren gemäß einem der Ansprüche 1 bis 4, dadurch gekennzeichnet, daß in dem wäßrigen Gemisch die verschiedenen Verbindungen in den folgenden molaren Verhältnissen vorhanden sind, die, mit Ausnahme von Piperidin und alkylsubstituierten Piperidinen, in Molen der Oxide angegeben sind;

$SiO_2 : Al_2O_3 > 20$;

$H_2O : SiO_2 = 10—100$, und

$NR : SiO_2 = 0,2—0,6$.

6. Ferrierit, dadurch gekennzeichnet, daß er nach einem Verfahren gemäß Anspruch 1 hergestellt worden ist.

7. Katalysatoren, dadurch gekennzeichnet, daß sie eines oder mehrere Metalle der Gruppe VIB, VIIB und VIII auf einem Ferrierit gemäß Anspruch 6 als Träger enthalten, wobei der Alkalimetallgehalt des Ferrierits auf unter 0,05 Gewichtsprozent vermindet worden ist.

8. Molekularsiebe, dadurch gekennzeichnet, daß sie aus einem Ferrierit gemäß Anspruch 6 bestehen, der zumindest teilweise entwässert worden ist.

9. Ein Verfahren zur Umwandlung von Kohlenwasserstoffen, insbesondere das selektive Hydrocracken von im wesentlichen n-Paraffinen in Gemischen von n-Paraffinen mit anderen Kohlenwasserstoffen, dadurch gekennzeichnet, daß ein Katalysator gemäß Anspruch 7 verwendet wird.

10. Ein Verfahren zur Trennung von Verbindungen mit einer praktisch nicht verzweigten Struktur von Gemischen dieser Verbindung mit verwandten Verbindungen mit verzweigter und/oder zyklischer Struktur, dadurch gekennzeichnet, daß ein Molekularsieb gemäß Anspruch 8 verwendet wird.

## Revendications

1. Un procédé pour la préparation de ferriérite en maintenant un mélange aqueux qui contient un ou plusieurs composés d'un métal alcalin (M), un ou plusieurs composés de l'aluminium, un composé organique azoté (NC) et un ou plusieurs composés du silicium et en séparant ensuite les cristaux de ferriérite de la liqueur-mère, caractérisé en ce que:

(a) le mélange contient de la pipéridine et/ou une ou plusieurs pipéridines alcoylées (NR) comme composé organique azoté;

(b) dans le mélange, les divers composés sont présents dans les rapports molaires suivants, qui, sauf pour la pipéridine et les pipéridines alcoylées, sont exprimés en moles des oxydes:

$SiO_2 : Al_2O_3 > 15$;

$H_2O : SiO_2 = 5—500$;

$NR : SiO_2 = 0,05—1,0$ et

$M_2O : Al_2O_3 > 1$;

(c) la préparation de la ferriérite est effectuée par chauffage du mélange à une température comprise entre 100 et 200°C.

2. Un procédé selon la revendication 1, caractérisé en ce que comme pipéridine alcoylée on utilise une méthyl pipéridine.

3. Un procédé selon la revendication 1 ou 2, caractérisé en ce que comme composé de métal alcalin ou utilise un composé du sodium.

4. Un procédé selon l'une quelconque des revendications 1 à 3, caractérisé en ce que comme composé du silicium on utilise un verre soluble sodique et comme composé de l'aluminium ou utilise du sulfate d'aluminium.

5. Un procédé selon l'une quelconque des revendications 1 à 4, caractérisé en ce que dans le mélange aqueux les divers composés sont présents dans les rapports molaires suivants qui, sauf pour la pipéridine et les pipéridines alcoylées, sont exprimés en moles des oxydes:

$SiO_2 : Al_2O_3 > 20$;

$H_2O : SiO_2 = 10—100$, et

$NR : SiO_2 = 0,2—0,6$.

6. Ferriérite, caractérisée en ce qu'elle a été préparée par un procédé selon la revendication 1.

7. Catalyseurs, caractérisés en ce qu'ils contiennent un ou plusieurs métaux des groupes VIB, VIIB et VIII sur une ferriérite selon la revendication 6 comme support, ferriérite dont la teneur en métal alcalin a été réduite à moins de 0,05% en poids.

8. Tamis moléculaires, caractérisés en ce qu'ils sont constitués d'une ferriérite selon la revendication 6, qui a été au moins partiellement déshydratée.

9. Un procédé pour la transformation d'hydrocarbures, en particulier pour l'hydrocraquage sélectif essentiellement des n-paraffines dans des mélanges de n-paraffines avec d'autres hydrocarbures, caractérisé en ce qu'on utilise un catalyseur selon la revendication 7.

10. Un procédé pour séparer des composés ayant essentiellement une structure non ramifiée à partir de mélanges de ces composés avec des composés voisins ayant une structure ramifiée et/ou cyclique, caractérisé en ce qu'on utilise un tamis moléculaire selon la revendication 8.